# EUROPEAN PATENT APPLICATION

(11) **EP 0 555 570 A1**
(43) Date of publication of application: **18.08.1993**
(21) Application number: 92301124.1
(22) Date of filing: 11.02.1992
(51) Int. Cl.: F16L 55/162

(54) **Sealing of pipes**

(71) Applicant: ALH SYSTEMS LIMITED, Westbury Wiltshire BA13 4TN (GB)
(72) Inventor: Stone, David, Trowbridge, Wiltshire, BA14 9DG (GB); Carruthers, Alec, Westbury, Wiltshire, BA13 4TB (GB)
(74) Representative: Calderbank, Thomas Roger

(57) **Abstract**

To seal a pipe (1), a delivery tube (5) in the pipe (1) preferably through a side wall in the pipe (3) and a spraying means (7) is inserted through the delivery tube (5) into the pipe (1), using a flexible rod (9). The delivery tube (5) is more rigid than the rod (9) so that the delivery tube (5) prevents twisting of the rod (9) in the pipe (1). The spraying means (7) may then be moved along the pipe (1), by the rod (9) during the spraying of the sealant and the spraying means (7) may be adjustable, so that the sealant is sprayed e.g. in a preferred direction, typically upwards in the pipe (1). Alternatively the rod (9) with attached directional spray means, may be inserted directly into the pipe (1).

## Description

The present invention relates to the sealing of pipes, at e.g. joints, fractures and fissures. It is particularly, but not exclusively, concerned with sealing joints in a gas main.

One known method of sealing a leaking joint in a gas main involves boring a hole in the main and inserting a sealant spraying means. The spraying means is mounted on a semi-flexible rod and inserted through the hole in the main and moved along the main by pushing the rod deeper into the main The rod is inserted until the spraying means has reached the joint, which is detected by a suitable joint location of the spraying means, and the joint can then be sprayed to seal it. In order to detect the joint a magnetic locator may be mounted on the spraying means. This method is discussed in GB-A-2223553.

This method has proved satisfactory for small gas pipes. However, the applicants have applied this method to pipes with a larger diameter (e.g. up to 48 inches), and have discovered that there is then a problem. It has been found that the flexible rod buckles and twists within a large pipe, and this buckling and twisting may be sufficiently great that it proves impossible to move the spraying means more than a relatively short distance into the pipe. The pipe forms a series of "S" bends which cause spring-back when it is attempted to push the rod further into the pipe. In this situation, a considerable length of extra rod can be inserted into the pipe without any progress of the spraying means. Furthermore, the spraying means becomes angled relative to the line of the joint, which could result in spraying across the line of the joint, instead of on it. In smaller pipes, as can be appreciated, the pipe itself limits the buckling of the rod, and this is the reason why the problem has not been discovered before.

The problem is made worse by the fact that it is not desirable to make many holes in the main, and therefore there is the need to seal joints which are relatively far from the point of insertion of the spraying means and rod. Thus, the problem of buckling becomes serious.

In order to solve this problem, the present invention proposes, in a first aspect, that a relatively rigid delivery tube (or carrier) be positioned in the pipe, and the spraying means inserted through that delivery tube using a flexible rod, which may be the standard flexible rod used in the known systems. The first aspect of the delivery tube has a much smaller diameter than the pipe, and so will restrict buckling and twisting of the rod. The present invention then relates to a method involving such an arrangement, and to an assembly of parts for use in such an arrangement.

As in the existing systems, it will usually be necessary to bore a hole in the wall of the pipe to insert the delivery tube, spraying means and flexible rod. When the pipe is a gas main, it will normally be necessary for a valve and sealing gland arrangement to be provided at the point of insertion of the delivery tube, spraying means and rod, to prevent gas escape.

Where it is desired to seal several joints, spaced along the pipe, it is preferable that the delivery tube, spraying means and rod be inserted to a distance corresponding to the furthest joint, and the delivery tube, spraying means and rod can then be withdrawn to seal successive joints.

The delivery tube may be of a light weight, relatively rigid material which may be coiled but which does not retain its curvature when uncoiled. However, because rigidity is important to achieve maximum distance of insertion, the delivery tube may be made up in straight lengths with e.g. spigoted joints. It is preferable that the material is capable of slight bending, so that it can be inserted through a side wall of the pipe and accommodate itself to the pipe after insertion. When the delivery tube is inserted, it may have an end cap on the free end thereof, which end cap prevents entry of material into the delivery tube, but which end cap can be pushed off by the spraying means when the spraying means is pushed through the delivery tube by the flexible rod. Rigid PVC or polypropylene may be suitable for the delivery tube, although there could be problems with it being too brittle.

The sealing material, and other features of the spraying arrangement may be similar to those shown in GB-A-2223553.

The rod may be solid, arid carry the wiring for a joint location of the spraying means. ALternatively, the rod itself may be hollow, and carry within it a solid member for such wiring and also carry a hollow tube for the sealant. The use of a hollow rod permits its diameter to be large without significant weight increase, thereby giving increased rigidity to the rod as compared with a solid rod of equivalent weight. Furthermore, such a hollow rod may be made of straight lengths connected by spigoted joints.

One problem with such a spraying means, however, is that it is designed to provide a uniform spray pattern. Therefore, particularly when the diameter of the pipe is large, and the spraying means is located at the bottom of the inside surface of the pipe, the spray will not be uniform around the circumference of the interior of the pipe.

The part of the interior of the pipe close to the spraying means will receive much more sealant than the opposed part of the circumference of the pipe. Therefore, a further development of the present invention proposes that the spraying means be provided with spraying outlets arranged to spray sealant in a preferred direction, and also has means for detecting the orientation of the spraying means, so that the orientation of the spraying means can be adjusted to cause the sealant to be sprayed in a selected direction.

Thus, when the spraying means at the end of the rod projects from the delivery tube, its weight will inevitably cause it to be located at the bottom of the pipe. The orientation means will identify the orientation of the head, and by rotating the rod it is possible to adjust the orientation of the head until the spraying outlets spray upwardly towards the upper inner surface of the pipe. Spraying then occurs in that selected direction, and the sprayed sealant will then flow around the interior surface of the pipe, so that the whole of the pipe is sealed. This arrangement is particularly advantageous for large pipes where the problem of non-uniform spraying from a standard head will be more extreme.

The use of a hollow rod with such a spraying head is particularly advantageous as it permits all the wiring for the spraying head to be contained within the rod.

Such a spraying means may be used in conjunction with the delivery tube and rod of the first aspect of the present invention. However, the use of such a spraying means to the end of a rod represents a second, independent, aspect of the present invention. It is possible, for example, for the spraying means to be at the end of a semi-rigid hollow conduit or solid rod which is inserted directly into the pipe, and is not passed through a more rigid delivery tube. The conduit may then be made of relatively rigid straight sections connected by spigots.

Embodiments of the present invention will now be described in detail, by way of example, with reference to the accompanying drawing in which:
Fig. 1 shows a sectional view through a pipe in which a delivery tube has been inserted, at the point at which the spraying means in inserted into the delivery tube; and
Fig. 2 shows a part of the embodiment to Fig. 1, but with the spraying means inserted through the delivery tube into the pipe.
Fig. 3 shows the spraying of a relatively small pipe, using the embodiment of Fig. 1;
Fig. 4 shows the spraying of a relatively large pipe, using the embodiment of Fig. 1;
Fig. 5 shows a spraying means which may be used in the present invention;
Fig. 6 shows the spraying of a relatively large pipe, using the spraying means of Fig. 5;
Fig. 7 shows a second embodiment of the present invention, incorporating the spraying means of Fig. 5; and
Fig. 8 shows a third embodiment of the present invention, incorporating the spraying means of Fig. 5.

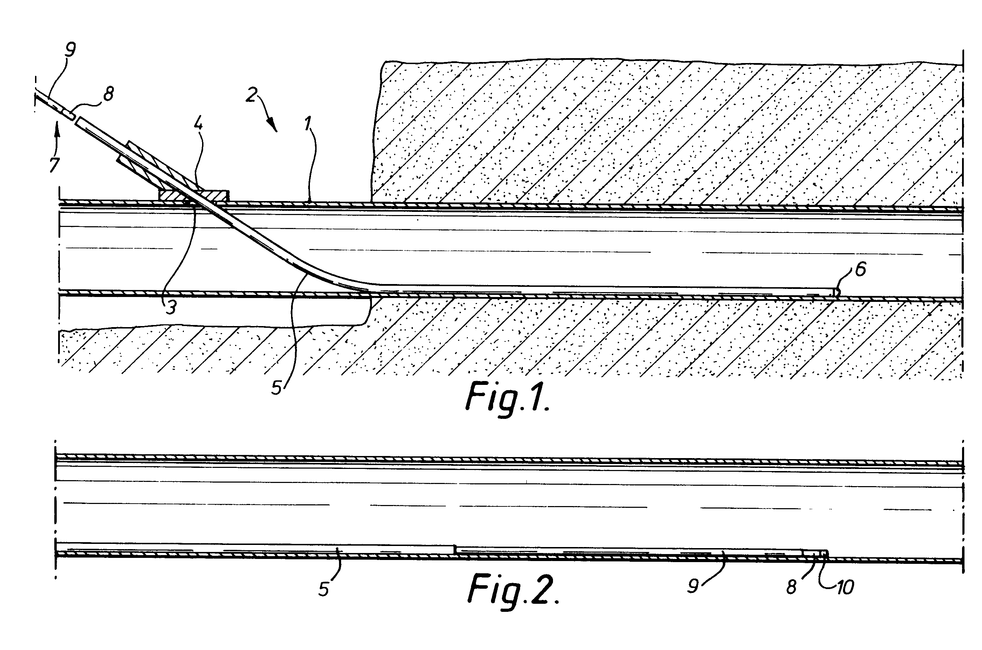

Referring to Fig. 1 which shows a first embodiment of the present invention a live gas main 1 has a faulty joint therein which is to be sealed. An excavation 2 is dug at a portion of the gas main 1 which is spaced from any joints which are to be sealed. A hole 3 is bored through the wall of the main 1, following established techniques. A valve and gland arrangement 4 is fitted to the main 2 at the site of the hole 3.

A hollow delivery tube 5, which has a push-off end cap 6, is inserted through the valve 4 and is moved a suitable distance along the main 1, so that its end is proximate the joint to be sealed.

A sealant spraying means 7 has a nozzle 8 through which a sealant is sprayable and is mounted on a flexible rod 9. The nozzle 8 is mounted on the end of the rod 9 in flow communication therewith so that the rod acts as a delivery hose for sealant. The sealant spraying means 7 is inserted into the delivery tube 5, and is moved along the tube 5 by pushing the rod 9 until the sealant spraying means 7 pushes off the end cap 6 of the delivery tube 5 so that the nozzle 8 and the part of the rod 9 proximate the nozzle 8 extend from the end of the delivery tube 5. The nozzle 8 is moved adjacent a site on the wall of the tube which is to be sealed.

A sealant which may be settable anserobic sealant, is then pumped through the rod 9 and sprays through the nozzle 8 to contact and adhere to the wall of the main 1. The sealant spraying means 7 may then be moved adjacent another site which is to be seled or may be removed, together with the delivery tube 5, from the gas main 1 through the bored hole 3. The hole 3 may then be resealed using established techniques.

As shown in Figure 2, the sealant spraying means 7 may have magnetic joint locator 10. The joint locator 10 may have electrical connections leading along the rod 9, or may be in the formed of signal generation and transmission means to cooperate with receiving means which receiving means may be distal from the transmission means.

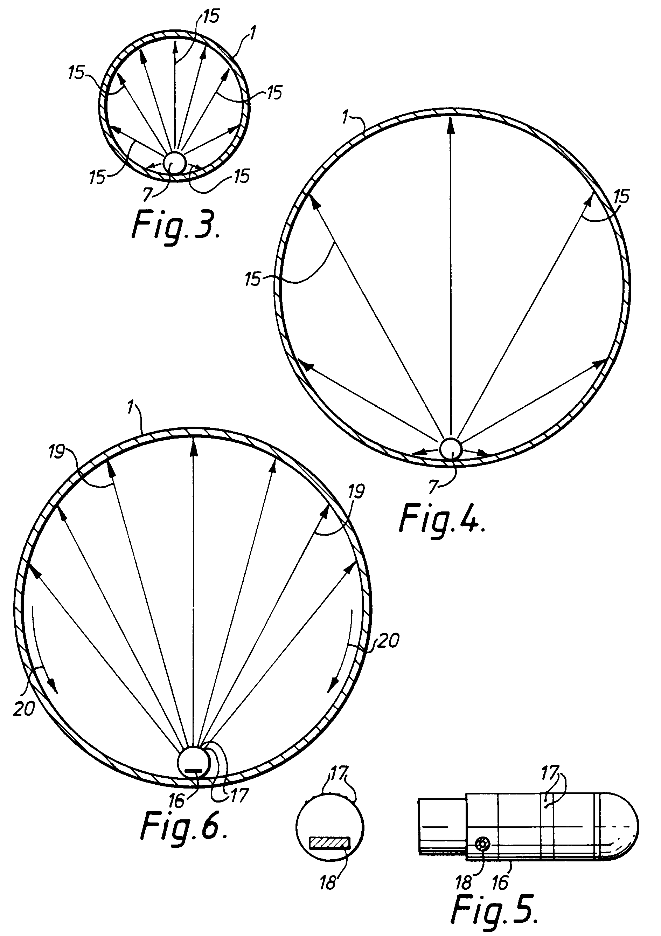

Known spraying means 7 may be used in the arrangements described with reference to Figs. 1 and 2, such as those disclosed in GB-A-2223553. Such spraying means have a plurality of spraying outlets arranged substantially uniformly around the periphery of the spraying means 7 (which is normally cylindrical). Thus, as shown in Fig. 3, sealant is sprayed in all directions within the pipe 1, as shown by arrows 15. The weight of the spraying means 7, and the manner of insertion shown in Figs. 1 and 2 means that the spraying means 7 is located at the bottom of the interior of the pipe, so it can be seen from Fig. 3 that parts of the pipe 1 adjacent the spraying means will receive more sealant than those parts of the pipe 1 remote from the spraying means. In a small pipe, such as shown in Fig. 3, this is not a problem. However, Fig. 4 shows the situation in a larger pipe, and it can then be seen that those parts of the pipe 1 remote from the spraying means 7 will receive much less sealant, per unit length of circumference, than will the parts of the pipe close to the spraying means 7. Thus, the amount of sealant sprayed on the part of the pipe 1 remote from the spraying means 7 may be insufficient to seal the leak of joint.

Fig. 5 shows, both inside and section view a spreading means which may enable this problem to be overcome. The spraying means 16 has a plurality of spraying outlets 17 arranged to extend around only part of its circumference (spraying means 16 is again generally cylindrical), so that directional spraying can be achieved. Furthermore, the spraying means includes means 18 for detecting the orientation of the spraying means 16. The orientation detection means 18 may be e.g. an electronic angular displacement indicator (e.g. that designed and manufactured by D. G. Electronics). The orientation detection means 18 enables the spraying means 16 to be positioned within the pipe so that the spraying outlet 17 are directed to the opposed surface of the pipe. This is shown in Fig. 6, in which the spraying means 16 is located at the bottom of the pipe, but the spraying outlets 17 direct sealant upwardly towards the opposed surface of the pipe 1. By suitable arrangement of these spraying outlets, it can be arranged that the sealant is spread substantially uniformly around the interior of the pipe, at least to that part remote from the spraying means 16. This is shown by arrows 19. Of course, such a directional spraying arrangement will not then spray the interior of the pipe 1 close to the spraying means, but it has been found that the sealant is normally sufficiently fluid that it will flow around the interior of the pipe, as shown by arrows 20, so that the whole of the interior of the pipe, will, in due course, receive an appropriate amount of sealant. This arrangement also has the advantage that it is efficient in terms of the amount of sealant used, which is advantageous for large pipes to avoid excessive use of sealant. As can be appreciated from Fig. 6, it is important that the spraying means 16 has the appropriate orientation, to direct the sealant towards the opposed surface of the pipe 1, corresponding to the upper segment of the pipe 1, but, as mentioned above, this orientation may be detected by the orientation detection means 18. Therefore, if after insertion of the rod 9, with the spraying means 16 thereon, it is found that the spraying means does not have the correct orientation, the rod may be rotated until the orientation is correct.

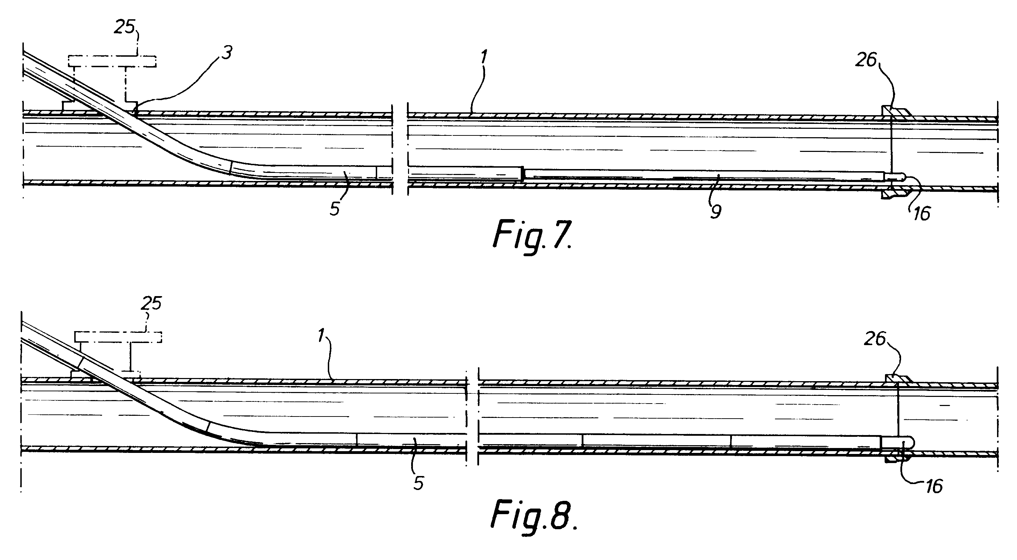

Thus, Fig. 7 shows an embodiment of the present invention similar to that of Figs. 1 and 2 but incorporating spraying means 16 described with reference to Figs. 5 and 6. In Fig. 7, parts which correspond to those in Figs. 1 and 2 are indicated by the same reference numerals. There is thus again a hollow delivery tube 5 which receives a flexible rod 9 on the end of which is the spraying means 16. Since the spraying means 16 is somewhat larger than a standard spraying means, the rod 9 may have to be more rigid, and therefor thicker than for the embodiments of Figs. 1 and 2, but the general principle may be the same. However, it is preferable that the rod 9 of this embodiment is hollow, and it then carries therein a rigid member containing the wiring for the spraying head 16 and a hollow tube acting as a duct for sealant to the spraying head.

However, Fig. 7 also shows that, for a large pipe, it is desirable that the hole 3 in the pipe 1 which permits the passage of the delivery tube 5, has a under-pressure angled entry fitting 25 thereon, to simplify the entry of the delivery tube.

For large pipes it has also been found that it is possible to omit the rod 9, and mount the spraying means 16 directly on the end of the delivery tube 5 so that the delivery tube 5 forms a conduit directly to the spraying means 18. Although that delivery tube 5 is more rigid than the rod 9, the large diameter of the pipe means that the delivery tube 5 can accommodate the change in direction needed from the angled entry fitting 25 to the direction extending axially of the pipe 1, and its relatively greater rigidity means that it is less likely to twist or coil within the pipe 1, so that the problems discussed above do not apply. The use of an angled entry fitting 25 also means that the delivery tube can be inserted so as to extend in either direction along the pipe 1. Preferably, the delivery tube 5 comprises a plurality of separable sections (this may also be used in e.g. the embodiment of Fig. 7), to make insertion of those sections easier. The sections may be connected by spigoted joints.

Thus, both the embodiments of Figs. 7 and 8 can move a spraying means 16 providing a directional spray to a pipe joint 26 to be sealed, and then the orientation detection means 18 ensures that the spraying means 16 is positioned so that spraying outlets 17 are directed upwardly. Spraying may then be carried out, as was described with reference to Fig. 6.

Although the present invention has been developed primarily for use with large diameter pipes, it is applicable to smaller diameter pipes, although there the problems of buckling and folding may be less acute. However, a standard kit comprising spraying means, delivery tube and rod may then be used for the majority of applications.

## Claims

1. A method of sealing a pipe comprising inserting into the pipe a spraying means on a rod, and spraying the interior of the pipe with sealant; wherein the spraying means is arranged to spray sealant in a preferred direction and the method further includes detecting the orientation of the spraying means in the pipe, thereby to determine the preferred spraying direction.

2. A method according to claim 1, wherein the rod is inserted directly into the pipe.

3. A method of sealing a pipe comprising inserting into the pipe a spraying means on a rod, and spraying the interior of the pipe with sealant; wherein the spraying means is inserted by passing it and the rod through a delivery tube, the delivery tube being more rigid than the rod and extending into the pipe.

4. A method according to claim 3, wherein the delivery tube is inserted through a side wall of the pipe prior to the insertion of the flexible rod in the delivery tube.

5. A method according to claim 4, wherein the end of the delivery tube inserted into the pipe is initially sealed by an end cap, which cap is removed by passage of the sealing means out of the end of the delivery tube in the pipe.

6. A method according to any one of claims 3 to 5, wherein the spraying means is arranged to generate a radially symmetric spraying pattern within the pipe.

7. A method according to any one of claims 3 to 5, wherein the spraying means is arranged to spray sealant in a preferred direction.

8. A method according to claim 7 further including detecting the orientation of the spraying means in the pipe, thereby to determine the preferred spraying direction.

9. A method according to any one of claims 1,2,7, and 8 wherein the orientation of the spraying means is adjusted so that it is directed upwardly in the pipe.

10. A method according to any one of the preceding claims, wherein the rod, and spraying means is moved along the pipe during the spraying of the sealant.

11. An assembly for sealing a pipe, having a spraying means on a rod and a delivery tube, wherein the spraying means is arranged to generate a radially symmetric spraying pattern within the pipe and there is orientation means for detecting the orientation of the spraying means.

12. An assembly according to claim 11, wherein the rod is hollow and wiring for the orientation means extends through the rod.

13. An assembly for sealing a pipe, having a spraying means on a rod and a delivery tube, the spraying means and rod being insertable through the delivery tube such that, in use, the spraying means is insertable into the pipe via the delivery tube for spraying sealant in the pipe.

14. An assembly according to claim 13 also having a valve for mounting on a side wall of the pipe, the delivery tube being insertable into the valve.

15. An assembly according to claim 13 or claim 14 having a removable end cap for sealing one end of the delivery tube.

16. An assembly according to any one of claims 13 to 15, wherein the spraying means is arranged to generate a radially symmetric spraying pattern within the pipe.

17. An assembly according to any one of claims 13 to 15, wherein the spraying means is arranged to spray sealant in a preferred direction.

18. An assembly according to claim 17, further including orientation means for detecting the orientation of the spraying means.

19. An assembly according to any one of claims 11 to 18, wherein the rod comprises a plurality of separable sections.
